# EUROPÄISCHE PATENTANMELDUNG

(11) **EP 0 689 304 A1**
(43) Veröffentlichungstag der Anmeldung: **27.12.1995**
(21) Anmeldenummer: 95108754.3
(22) Anmeldetag: 07.06.1995
(51) Int. Cl.: H04B 10/12

(54) **Schaltungsanordnung zur Umschaltung (Ersatzschaltung) zwischen den beiden Fasern einer zwischen zwei Knotenpunkten verlaufenden, gedoppelten LWL-Verbindung**

(30) Priorität: 17.06.1994 DE 4421305
(71) Anmelder: SIEMENS AKTIENGESELLSCHAFT, D-80333 München (DE)
(72) Erfinder: Huber, Manfred, Dr.-Ing., D-82166 Gräfelfing (DE); Jahreis, Oliver, Dipl.-Ing., D-80804 München (DE)

(57) **Zusammenfassung**

Zur Ersatzschaltung zwischen den beiden Fasern einer zwischen zwei Knotenpunkten verlaufenden, gedoppelten LWL-Verbindung, bei der das optische Signal am sendeseitigen Knotenpunkt auf die beiden Fasern aufgesplittet wird, welche am empfangsseitigen Knotenpunkt durch eine optische Umschalteinrichtung zusammengefasst werden, über die im Normalbetriebsfall die Arbeitsfaser mit dem empfangsseitigen Knotenpunkt verbunden ist und die im Ersatzschaltungsfall selbständig statt der Arbeitsfaser die redundante Faser mit dem empfangsseitigen Knotenpunkt verbindet, sind sendeseitig zwischen den Splitter und die zwei Fasern zwei optische Schalter eingefügt, die im Normalbetriebsfall beide geschlossen sind und von denen im Ersatzschaltungsfalle nur der zwischen die redundante Faser und den Splitter eingefügte optische Schalter geschlossen bleibt, wogegen der zwischen den Splitter und die Arbeitsfaser eingefügte optische Schalter geöffnet wird.

## Beschreibung

Zur Erhöhung der Störungssicherheit einer zwischen zwei Punkten eines Telekommunikationssystems verlaufenden Lichtwellenleiter-Verbindung kann man eine gedoppelte, d.h. zwei gesonderte Fasern aufweisende LWL-Verbindung vorsehen, bei der bei einer Unterbrechung der Signalübertragung über die eine Faser eine Umschaltung auf die andere Faser vorgenommen wird, die daraufhin an Stelle der zuvor genutzten einen Faser für die weitere Signalübertragung genutzt wird. Die hierfür erforderliche Umschaltzeit, während der die Signalübertragung unterbrochen ist, soll dabei möglichst kurz sein.

Zu einer solchen Umschaltung (Ersatzschaltung) zwischen den beiden Fasern einer zwischen zwei Knotenpunkten verlaufenden, gedoppelten LWL-Verbindung kann man auf folgende Weise vorgehen (siehe auch ITU-T Study Group 13, Question 23/13, Contribution 15, 1993):
Am sendeseitigen Knotenpunkt wird das optische Signal auf zwei Fasern (Arbeitsfaser und redundante Faser) aufgesplittet, die am empfangsseitigen Knotenpunkt durch eine optische Umschalteinrichtung zusammengefasst werden, über die im Normalbetriebsfall die Arbeitsfaser mit dem empfangsseitigen Knotenpunkt verbunden ist; bei einem Bruch der Arbeitsfaser schaltet die Umschalteinrichtung auf Grund des Ausfalls des Lichts selbständig um, so daß nunmehr statt der Arbeitsfaser die redundante Faser mit dem empfangsseitigen Knotenpunkt verbunden ist. Die Unterbrechungszeit kann wegen der Vornahme der Umschaltung auf der Empfangsseite kurz gehalten werden. Bei einer solchen Lösung führt indessen die gebrochene Arbeitsfaser bis zur Bruchstelle weiterhin das optische Signal, was wegen der starken Bündelung des geführten Laserlichts zu Gefährdungen des Wartungs- bzw. Reparaturpersonals oder auch eines zufälligen Betrachters führen kann.

Die Erfindung stellt sich demgegenüber die Aufgabe, solche Gefährdungen zu vermeiden und damit die sog. Lasersicherheit entsprechend zu erhöhen.

Die Erfindung betrifft eine Schaltungsanordnung zur Umschaltung (Ersatzschaltung) zwischen den beiden Fasern einer zwischen zwei Knotenpunkten verlaufenden, gedoppelten LWL-Verbindung, bei der das optische Signal am sendeseitigen Knotenpunkt auf die beiden Fasern aufgesplittet wird, welche am empangsseitigen Knotenpunkt durch eine optische Umschalteinrichtung zusammengefasst werden, über die im Normalbetriebsfall die eine Faser als Arbeitsfaser mit dem empfangsseitigen Knotenpunkt verbunden ist und die im Ersatzschaltungsfall selbständig statt der einen die andere, redundante Faser mit dem empfangsseitigen Knotenpunkt verbindet; diese Schaltungsanordnung ist erfindungsgemäß dadurch gekennzeichnet, daß sendeseitig zwischen den Splitter und die zwei Fasern zwei optische Schalter eingefügt sind, die im Normalbetriebsfall beide geschlossen sind und von denen im Ersatzschaltungsfalle empfangsseitiger Umschaltung von der Arbeitsfaser auf die redundante Faser nur der zwischen diese Faser und den Splitter eingefügte optische Schalter geschlossen bleibt, wogegen der zwischen den Splitter und die genannte eine Faser eingefügte optische Schalter geöffnet wird.
Dazu kann in weiterer Ausgestaltung der Erfindung im Ersatzschaltungsfalle die empfangsseitige Umschaltung von der einen auf die andere Faser dem sendeseitigen Knotenpunkt gemeldet werden, der daraufhin den zwischen den Splitter und die genannte eine Faser eingefügten optischen Schalter öffnet.

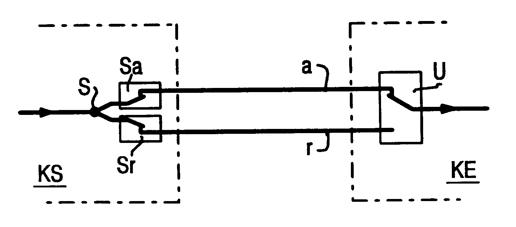

Anhand der Zeichnung wird die Erfindung noch näher erläutert.

In der Zeichnung ist in einem zum Verständnis der Erfindung erforderlichem Umfange eine zwischen zwei hier auch als Knotenpunkte bezeichneten Punkten KS, KE eines Telekommunikationssystems verlaufende gedoppelte, d.h. eine Arbeitsfaser a und eine redundante Faser r aufweisende Lichtwellenleiter-Verbindung. Am empfangsseitigen Knotenpunkt KE werden die beiden Fasern a, r durch eine optische Umschalteinrichtung U zusammengefasst, über die im Normalbetriebsfall die Arbeitsfaser a mit dem empfangsseitigen Knotenpunkt KE verbunden ist; bei einem Bruch der Arbeitsfaser a , der, ohne daß dies hier näher erläutert werden müsste, an der Umschalteinrichtung U anhand des Ausfalls des bis dahin über die Arbeitsfaser a übertragenen Lichts festgestellt werden kann, schaltet die Umschalteinrichtung U selbständig um, so daß nunmehr statt der Arbeitsfaser a die redundante Faser r mit dem empfangsseitigen Knotenpunkt KE verbunden ist.
Am sendeseitigen Knotenpunkt KS wird das zu übertragende optische Signal mittels eines Splitters S auf Arbeitsfaser a und redundante Faser r aufgesplittet. Dabei ist nun zwischen den Splitter S und die zwei Fasern a, r zwei optische Schalter Sa, Sr eingefügt, die im Normalbetriebsfall beide geschlossen sind. Im Ersatzschaltungsfalle, d.h. bei empfangsseitiger Umschaltung von der Arbeitsfaser a auf die redundante Faser r, möge der sendeseitige Knotenpunkt KS im Rahmen eines entsprechenden Protokolls eine Meldung erhalten, auf die hin von den beiden Schaltern Sa, Sr der zwischen die redundante Faser r und den Splitter S eingefügte optische Schalter Sr weiterhin geschlossen bleibt, wogegen der zwischen den Splitter S und die Arbeitsfaser a eingefügte optische Schalter Sa geöffnet wird.
Somit wird einerseits im Wege der empfangsseitigen Umschaltung die mit der Ersatzschaltung zwangsläufig verbundene Unterbrechungszeit weiterhin kurz gehalten und andererseits sichergestellt, daß kurze Zeit nach der Unterbrechung die gebrochene Faser kein optisches Signal mehr führt. Die erforderliche Lasersicherheit ist damit gewährleistet.

## Patentansprüche

1. Schaltungsanordnung zur Umschaltung (Ersatzschaltung) zwischen den beiden Fasern (a, r) einer zwischen zwei Knotenpunkten (KS, KE) verlaufenden, gedoppelten LWL-Verbindung, bei der das optische Signal am sendeseitigen Knotenpunkt (KS) auf die beiden Fasern (a, r) aufgesplittet wird, die am empfangsseitigen Knotenpunkt (KE) durch eine optische Umschalteinrichtung (U) zusammengefasst werden, über die im Normalbetriebsfall die eine Faser (a) als Arbeitsfaser mit dem empfangsseitigen Knotenpunkt (KE) verbunden ist und die im Ersatzschaltungsfall selbständig statt der einen (a) die andere, redundante Faser (r) mit dem empfangsseitigen Knotenpunkt (KE) verbindet,
**dadurch gekennzeichnet**,
daß sendeseitig zwischen den Splitter (S) und die zwei Fasern (a, r) zwei optische Schalter (Sa, Sr) eingefügt sind, die im Normalbetriebsfall beide geschlossen sind und von denen im Ersatzschaltungsfalle empfangsseitiger Umschaltung von der Arbeitsfaser (a) auf die redundante Faser (r) nur der zwischen diese Faser (r) und den Splitter (S) eingefügte optische Schalter (Sr) geschlossen bleibt, wogegen der zwischen den Splitter (S) und die genannte eine Faser (a) eingefügte optische Schalter (Sa) geöffnet wird.

2. Schaltungsanordnung nach Anspruch 1,
**dadurch gekennzeichnet**,
daß im Ersatzschaltungsfalle die empfangsseitige Umschaltung von der einen (a) auf die andere (r) Faser dem sendeseitigen Knotenpunkt (KE) gemeldet wird, der daraufhin den zwischen den Splitter (S) und die genannte eine Faser (a) eingefügten optischen Schalter (Sa) öffnet.
